# EUROPEAN PATENT APPLICATION

(11) **EP 3 141 962 A2**
(43) Date of publication of application: **15.03.2017**
(21) Application number: 16306084.1
(22) Date of filing: 25.08.2016
(51) Int. Cl.: G03G 9/09, G03G 9/08, G03G 9/093

(54) **POLYMER-ENCAPSULATED CARBON NANOTUBE: PROCESS FOR ITS PREPARATION AND USE THEREOF**

(30) Priority: 11.09.2015 US 201514851420
(71) Applicant: King Abdulaziz City for Science and Technology, 11442 Riyadh (SA)
(72) Inventor: BASFAR, Ahmed, 11442 RIYADH (SA); ADAM, Omar, 72100 LE MANS (FR)
(74) Representative: Peguet, Wilfried

(57) **Abstract**

A process for preparing a polymer-encapsulated carbon nanotube material is described. The process comprises a suspension polymerization process involving a carbon nanotube material. The process can also involve a charge control agent. The polymer-encapsulated carbon nanotube material has particles size in the micron range. The material can be used in toner applications.

## Description

### FIELD OF TECHNOLOGY

This disclosure relates generally to polymerized toners. More specifically, this disclosure relates to a toner material comprising a polymer-encapsulated carbon nanotube. The process for the preparation of the toner material of the disclosure is based on suspension polymerization.

### BACKGROUND

Ever since the issuance of the first toner-related patent toner in 1938 (Carlson) and the manufacture of the first Xerox™ automatic reproduction machine in 1960, there have been many developments in the field of toners. The Xerox™ machine involves a dry printing process. This process was later (1978) applied to computer printing.

There have been many stages in the development of toners. An earlier version known as pulverized toner involved mixing all the ingredients in an extruder at high temperature. In a recent version known as polymerized toner, the toner material is produced by a chemical reaction (coupling). In this version, particles in the material have smaller and more uniform sizes. Polymerized toners lead to a sharp print. Also, polymerized toners allow for the use of a reduced amount of toner material; accordingly, they are environmentally friendly.

Processes for preparing polymerized toner materials are known in the art. Such processes include for example suspension polymerization (Yang et al., 2003), emulsion polymerization (Kmiecik-Lawrynowicz et al., 1995), dispersion polymerization (Ober et al., 1986), interface/free radical polymerization, and aggregation process. Ober et al. identified the main differences between polymerization, emulsion polymerization, and dispersion polymerization, as shown in **Table 1** below.

**Table 1. Comparison among various polymerization techniques**

| | Emulsion | Dispersion | Suspension |
|---|---|---|---|
| Monomer | Droplets Micelles/particles Little in medium | Particles Mostly in medium | Droplets Little in medium |
| Initiator | Mostly in medium | Particles and medium | Particles/droplet |
| Stabilizer | May be present | Necessary | Necessary |
| Surfactant | Present | None | None |
| Initial Homogeneity | Multiple phase | Single phase | Dual phase |

The suspension polymerization process presents some advantages over the other processes. Firstly, suspension polymerization allows for the preparation of particles with perfectly spherical shape and with less stabilizer adsorption. Secondly, the product is homogenous, particularly for monomers having a very low solubility in the continuous phase. Thirdly, the product has a higher purity than a product obtained from emulsion polymerization for example. Fourthly, control of the reaction temperature is easier due to the presence of the dispersion medium (e.g., water).

However, despite these advantages, the particle size of a material obtained by suspension polymerization is usually larger than 5 µm, which is far beyond the desired size for toners. In order to overcome this disadvantage, devices such as high-speed stirrers (magnetic or mechanical), or homogenizers have been used to reduce the size of the droplets. For example, the size of the monomer droplets can be set as desired by adjusting the speed of the agitation. The size of the monomer droplets can also be influenced by the nature and amount of the suspension stabilizer used, and by the volume ratio of the dispersed phase (organic phase) and the continuous phase (aqueous phase).

Suspension polymerization is a reaction which occurs in a heterogeneous medium, *via* free radicals (Santos et al., 2008). The reaction is carried out in a liquid phase (generally water), in which neither the monomer nor the polymer is soluble. Typically, there are two types of suspension polymerization. A first type, known as powder polymerization, wherein the polymer is insoluble in its monomer, and thus precipitates leading to the formation of irregular grains or particles, PVC is an example of the "powder" type suspension polymerization. A second type, known as beads suspension polymerization, wherein the polymer is soluble in its monomer and smooth spherical particles are produced.

An attempt to prepare particles for toner is disclosed in the art (Kiatkamjornwong et al., 2003). Kiatkamjornwong et al. studied the synthesis and characterization of a styrenic-based polymerized toner and its composites for electro photographic-printing. For this purpose, they encapsulated carbon black nano-particles by styrene-butyl acrylate co-polymer. This resulted in a polymerized toner material having particles with smooth spherical surfaces and particles size in the range of 4-10 µm with a coefficient of variation of 20-30. The material leads to a print quality with high background fog, low maximum density, and small amount of image raggedness.

It is known in the art that there are challenges associated with the use of carbon black. For example regarding the concentration of carbon black, thus far, the amount of carbon black used as coloring pigment incorporated into polymerization mixture is limited, since, the surface functional groups of carbon black pigment inhibit the rate of polymerization and decrease the molecular weight of the resulting polymerized toner.

Hsieh et al. (2008) investigated a process where they could prepare toner powder from aqueous pigment concentrate dispersion. The process comprises blending at least an aqueous-based pigment concentrate dispersion, and resin wax to produce paste; charging the paste to an extruder and compounding the paste at a temperature of up to 150°C to generate an extruded pigment/resin mixture. This mixture is dispersed in vinyl monomer to create an organic phase wherein the resin is solublized. Consequently, the organic phase is diffused in an aqueous phase containing a stabilizer. The organic phase and the aqueous phase are then mixed under shear force to form a suspension of toner size droplets. The process further comprises heating the suspension to polymerize the vinyl monomer, and washing, drying, and collecting the particles for use as dry toner particles.

Recently, Jang et al. prepared a polymerized toner (U.S. 2012/107736-A1, KR 2012044242-A, CN 102455612-A) by a process comprising: forming an aqueous dispersion comprising dispersant, and monomer mixture comprising a binder resin monomer, carbon black, a styrene block copolymer, copper phthalocyanine, a charge control agent, and a wax; and adding the monomer mixture to the aqueous dispersion and subjecting the same to a suspension polymerization to form toner particles. These toner particles had specifications of a toner with good image and high resolution.

Turning to encapsulation of carbon nanotubes by polymerization process, attempts to study the fundamental of CNTs dispersion and their encapsulation by polymerization for applications other than toner applications have been reported. There are many processes for preparing encapsulated CNT through monomers polymerization. These include for example emulsion polymerization, mini emulsion polymerization and suspension polymerization. In this regard, Xia et al. (2003) reported on polymer-encapsulated CNTs prepared through ultrasonically initiated *in situ* emulsion polymerization, and they could polymerize monomers of BA or MMA while CNTs were dispersed by ultrasound. The CNTs were coated by the synthesized polymers, however, they concluded that, ultrasonically initiated *in situ* emulsion polymerization provides novel surface modification method for carbon nanotubes with high surface energy and much entanglement.

Another attempt was done by Arnold et al. (2005). They investigated the encapsulation of CNTs by self-assembling peptide amphiphilic. They demonstrated the dispersion and noncovalent functionalization of carbon nanotubes in water using peptide amphiphiles each consisting of a short hydrophobic alkyl tail coupled to a more hydrophilic peptide sequence. The encapsulation of CNTs by peptide amphiphiles is confirmed using transmission electron microscopy and optical absorbance spectroscopy.

Also, Nie et al. (2013) described the preparation of poly(styrene-co-butylacrylate)-encapsulated SWCNTs under ultrasonic irradiation. In a first step, they chemically modified the SWCNTs by grafting 3-(trimethoxy)-propylmethacrylate-silane (silane-coupling agent, KH750) on the surface of the SWCNTs. In a second step, an ultrasonically initiated *in situ* emulsion polymerization of monomer styrene (St) n-butyl and acrylate (BA) proceeds in the presence of KH570-g-SWCNTs. Consequently, poly (St-BA)/SWCNTs emulsion was obtained. Their TEM micrographs confirmed that SWCNTs were coated with the obtained polymer.

There is still a need for processes for preparing polymer-encapsulated carbon nanotube materials. Also, there is a need for toner materials having suitable particle size.

### SUMMARY

This disclosure relates to a process for the preparation of a polymerized toner material. The process is based on suspension polymerization and involves use of carbon nanotube instead of carbon black. The polymer-encapsulated carbon nanotube material of the disclosure has particles with sizes in the micron range. Also, the size of the particles is uniform throughout the material. The particles have a core-shell structure with carbon nanotube attached to the core.

Several embodiments for the process and material of this disclosure are outlined below.

This disclosure provides for a process for preparing a toner material, wherein the process comprises a suspension polymerization process involving a carbon nanotube material. The suspension polymerization process can further involve a carbon nanotube material that is modified with boron.

In one embodiment, the suspension polymerization process further involves a charge control agent (CCA). Preferably, the CCA is free of any chemical group which reacts with radicals; also preferably, the CCA is free of any carbonyl group of thiocarbonyl group; also preferably, the carbon nanotube material is modified with boron. In this embodiment, the CCA is at a concentration of about 0.42 to 0.05wt%, preferably about 0.05wt%.

In one embodiment, the process for preparing a polymer-encapsulated carbon nanotube material comprises: (a) preparing a first mixture or dispersed phase comprising monomers of at least one type, a cross-linker, an initiator and a charge control agent; (b) preparing a second mixture or continuous phase comprising a polymeric alcohol, a stabilizer and a carbon nanotube material; and (c) mixing the dispersed phase with the continuous phase to obtain the polymer-encapsulated carbon nanotube material.

In one embodiment, step (a) as outlined above comprises a step of adding the CCA to a mixture comprising the monomers, the cross-linker and the initiator.

In one embodiment, step (b) as outlined above comprises heating to a temperature of about 50 to 90°C, preferably about 60 to 80°C, more preferably about 70°C.

In one embodiment, step (c) as outlined above comprises adding the dispersed phase to the continuous phase, drop by drop, under stirring.

In one embodiment, step (c) as outlined above comprises heating to a temperature of about 50 to 90°C, preferably about 60 to 80°C, more preferably about 75°C; for about 5 to 9 hours, preferably about 6 to 8 hours, more preferably about 7 hours.

In one embodiment, step (c) as outlined above comprises, after step (c), a step of cooling to room temperature (d).

In one embodiment, the CCA is free of any chemical group which reacts with radicals; preferably, the CCA is free of any carbonyl group of thiocarbonyl group; also preferably, the carbon nanotube material is modified with boron. In this embodiment, the CCA is at a concentration of about 0.42 to 0.05wt%, preferably about 0.05wt%.

In one embodiment, the monomers are styrene and butyl acrylate, the cross-linker is DVB, the initiator is BPO, the CCA is benzyltributylammonium-4-hydroxyl-naphthalene-1-sulfonate (such as the one commercialized by KMT, Korea under the brand name MEP-51), the polymeric alcohol is PVA, and the stabilizer is SDS.

This disclosure also provides for a polymer-encapsulated carbon nanotube material obtained by a process which comprises: (a) preparing a first mixture or dispersed phase comprising monomers of at least one type, a cross-linker, an initiator and a charge control agent; (b) preparing a second mixture or continuous phase comprising a polymeric alcohol, a stabilizer and a carbon nanotube material; and (c) mixing the dispersed phase with the continuous phase to obtain the polymer-encapsulated carbon nanotube material.

In one embodiment of the material, the monomers are styrene and butyl acrylate, the cross-linker is DVB, the initiator is BPO, the charge control agent is benzyltributy1ammonium-4-hydroxyl-naphthalene-1-sulfonate (such as the one commercialized by KMT, Korea under the brand name MEP-51), the polymeric alcohol is PVA, and the stabilizer is SDS.

In one embodiment, the material is used in toner applications.

In one embodiment of the material, the particles size is in the range of the micron.

Other features will be apparent from the accompanying drawings and from the detailed description that follows.

### BRIEF DESCRIPTION OF DRAWINGS

Example embodiments are illustrated by way of example and not limitation in the figures of the accompanying drawings, in which:
**Fig. 1** illustrates the conversion of the monomers *versus* the charge control agent (MEC-88) concentration.
**Fig. 2** illustrates the chemical structure of MEC-88.
**Fig. 3** presents a scanning electron microscope (SEM) micrograph for suspension polymerization of styrene and butyl acrylate in presence of a carbon nanotube material (CNT-D) at a MEC-88 concentration of 0.42wt% (0.102 g; Sample 1, **Table 14**)**.**
**Fig. 4a, Fig. 4b** and **Fig. 4c** present scanning electron microscope (SEM) micrographs for suspension polymerization of styrene and butyl acrylate in presence of CNT-D at a MEC-88 concentration of 0.28wt% (0.068 g; Sample 2, **Table 14**)**.**
**Fig. 5a, Fig. 5b** and **Fig. 5c** present scanning electron microscope (SEM) micrographs for suspension polymerization of styrene and butyl acrylate in presence of CNT-D at a MEC-88 concentration of 0.14wt% (0.034 g; Sample 3, **Table 14**)**.**
**Fig. 6a, Fig. 6b** and **Fig. 6c** present scanning electron microscope (SEM) micrographs for suspension polymerization of styrene and butyl acrylate in presence of CNT-D at a MEC-88 concentration of 0.07wt% (0.017 g; Sample 4, **Table 14**)**.**
**Fig. 7a, Fig. 7b** and **Fig. 7c** present scanning electron microscope (SEM) micrographs for suspension polymerization of styrene and butyl acrylate in presence of CNT-D at a MEC-88 concentration of 0.05wt% (0.011 g; Sample 5, **Table 14**).
**Fig. 8** illustrates the conversion of the monomers *versus* the charge control agent (MEP-51) concentration.
**Fig. 9** illustrates the chemical structure of MEP-51.
**Fig. 10** presents a scanning electron microscope (SEM) micrograph for suspension polymerization of styrene and butyl acrylate in presence of CNT-D at a MEP-51 concentration of 0.42wt% (0.102 g; Sample SP-CNT-D-MEP-51-1, **Table 15**)**.**
**Fig. 11a, Fig. 11b** and **11c** present scanning electron microscope (SEM) micrographs for suspension polymerization of styrene and butyl acrylate in presence of CNT-D at a MEP-51 concentration of 0.28wt% (0.068 g; Sample SP-CNT-D-MEP-51-2, **Table 15**)**.**
**Fig. 12a, Fig. 12b** and **12c** present scanning electron microscope (SEM) micrographs for suspension polymerization of styrene and butyl acrylate in presence of CNT-D at a MEP-51 concentration of 0.14wt% (0.034 g; Sample SP-CNT-D-MEP-51-3, **Table 15**)**.**
**Fig. 13a, Fig. 13b** and **13c** present scanning electron microscope (SEM) micrographs for suspension polymerization of styrene and butyl acrylate in presence of CNT-D at a MEP-51 concentration of 0.07wt% (0.017 g; Sample SP-CNT-D-MEP-51-4, **Table 15**)**.**
**Fig. 14a, Fig. 14b** and **14c** present scanning electron microscope (SEM) micrographs for suspension polymerization of styrene and butyl acrylate in presence of CNT-D at a MEP-51 concentration of 0.05wt% (0.011 g; Sample SP-CNT-D-MEP-51-5, **Table 15**)**.**

Other features of the present embodiments will be apparent from the accompanying drawings and from the detailed description that follows.

### DETAILED DESCRIPTION

In order to provide a clear and consistent understanding of the terms used in the present specification, a number of definitions are provided below. Moreover, unless defined otherwise, all technical and scientific terms as used herein have the same meaning as commonly understood to one of ordinary skill in the art to which this disclosure pertains.

The use of the word "a" or "an" when used in conjunction with the term "comprising" in the claims and/or the description may mean "one", but it is also consistent with the meaning of "one or more", "at least one", and "one or more than one". Similarly, the word "another" may mean at least a second or more.

As used herein, the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements or process steps.

As used herein, the term "about" is used to indicate that a value includes an inherent variation of error for the device or the method being employed to determine the value.

As used herein, when referring to numerical values or percentages, the term "about" includes variations due to the methods used to determine the values or percentages, statistical variance and human error. Moreover, each numerical parameter in this application should at least be construed in light of the number of reported significant digits and by applying ordinary rounding techniques.

This disclosure is drawn to a process for the preparation of a polymerized toner material. The process is based on suspension polymerization and involves use of carbon nanotube instead of carbon black. The polymer-encapsulated carbon nanotube material of this disclosure has particles with sizes in the micron range. Also, the size of the particles is uniform throughout the material. The particles have a core-shell structure with carbon nanotube attached to the core.

Monomers used in this disclosure are styrene and butyl-acrylate. As will be understood by a skilled person, other suitable monomers may also be used. Such monomers include for example p-chlorostyrene, vinyl naphthalene, vinyl esters such as vinyl acetate, vinyl propionate and vinyl benzoate. Prior to undertaking the polymerization process, the monomers were purified to remove any inhibitors.

The initiator used in this disclosure is benzyl peroxide (BPO or BP). As will be understood by a skilled person, other suitable initiators may also be used. Such initiators include for example hydroquinone (HQ). The initiator was generally used as received.

Divinyl benzene (DVB) was used as cross-linker. As will be understood by a skilled person, other suitable cross-linkers may also be used. Such cross-linkers include for example ethylene glycol methacrylate (EG).

Sodium n-dodecyl sulfate (SDS) was used as dispersant. As will be understood by a skilled person, other suitable dispersant may also be used. Such dispersants include for example sodium styrene sulfonate (NaSS).

Polyvinyl alcohol (PVA) was used as stabilizer. As will be understood by a skilled person, other suitable stabilizers may also be used. Such stabilizers include for example Polyethylene Glycol (PEG).

Details of each of the above chemicals used in this disclosure including their suppliers are provided in **Table 2** below.

**Table 2. Details of chemicals used in this disclosure**

| **Chemical name** | **Purity** | **Supplier** |
|---|---|---|
| Styrene (St) | 99% | Duksan Co. |
| n-Butylacrylate (BuA) | 99% | Samchun Pure Chem. Co. |
| Divinylbenzene (DVB) | 80% | Aldrich |
| Polyvinyl alcohol (PVA) | 87-89% hydrolyzed | Alfa Aesar |
| Sodium n-dodecyl sulfate (SDS) | | International Laboratory |
| Benzyl peroxide (BP or BPO) | 97% | Alfa Aesar |

Carbon nanotubes (CNTs) of four different types were investigated in this disclosure. The four CNT types are: CNT modified with NH₂ (CNT-C), CNT modified with boron (CNT-D), CNT unmodified long chain (CNT-A) and CNT unmodified short chain (CNT-B). The properties of the CNTs used are listed in **Tables 3-6** below.

**Table 3. Properties of unmodified long chain CNTs, grade KNT -M₃₁ (herein after CNT-A)**

| Purity | Unit | Value | Method of measurement |
|---|---|---|---|
| Averages diameter | nm | 9.5 | TEM |
| Average | µm | 10-30 | TEM |
| length | | | |
| Carbon purity | % | 90 | TGA |
| Metal oxide | % | 10 | TGA |
| Amorphous carbon | - | * | HRTEM |
| Surface area | M²/g | 250-300 | BET |

| | | | |
|---|---|---|---|
| *Pyrolytically deposited Carbon on the surface of the NC7000 | | | |

**Table 4. Properties of unmodified short chain multi-walled CNTs, grade KNT-s M₃₁ (herein after CNT-B)**

| Purity | Unit | Value | Method of measurement |
|---|---|---|---|
| Averages diameter | nm | 3-10 | TEM |
| Average length | µm | 0.5-2 | TEM |
| Carbon purity | % | >95 | TGA |
| Metal oxide | % | - | - |
| Amorphous carbon | - | * | HRTEM |
| Surface area | M²/g | >500 | N/A |

**Table 5. Properties of CNTs modified with NH₂, grade KNT-MNH₁₃ (herein after CNT-C)**

| Purity | Unit | Value | Method of measurement |
|---|---|---|---|
| Averages diameter | nm | 13-18 | TEM |
| Average length | µm | 1-12 | TEM |
| Carbon purity | % | 99 | TGA |
| Metal oxide | % | - | - |
| Amorphous | - | * | HRTEM |
| carbon | | | |
| Surface area | M²/g | N/A | N/A |

**Table 6. Properties of CNTs modified with boron, grade KNT-MBO (herein after CNT-D)**

| Purity | Unit | Value | Method of measurement |
|---|---|---|---|
| Averages diameter | nm | 20-30 | TEM |
| Average length | µm | N/A | N/A |
| Carbon purity | % | N/A | N/A |
| Metal oxide | % | - | - |
| Amorphous carbon | - | * | HRTEM |
| Surface area | M²/g | N/A | N/A |

The charge control agent used in the present invention can be a negative or positive charged CCA type. In one embodiment, it is selected from a metal complex of salicylic acid derivative, a quaternary ammonium compound, an amine pyridinium compound and an alkyl pyridinium compound, and preferably selected from a metal complex of salicylic acid derivative and a quaternary ammonium compound. Eight different types of charge control agent (CCA), obtained from Korea, were investigated in this disclosure. Their properties are outlined in Table 7 below. As will be understood by a skilled person, other suitable charge control agents may also be used.

**Table 7. Properties of the eight types of CCA used in this disclosure**

| No. | Chemical name | Chemical code | Chemical compound | Company | Charge µC/g |
|---|---|---|---|---|---|
| 1 | CCA | Nigrosin | N/A | International Lab. 143-19-1 | ---- |
| 2 | CCA | MEC-105S | Zirconium salicylate | Korea | -20~30 |
| 3 | CCA | MEC-88 | Hydroxyaluminium bis[2-hydroxy-3,5-di-*tert*-butyl salicylic acid | Korea | -20~-35 |
| 4 | CCA | MEC-84-E | Zinc 3,5-di-*tert-*butylsalicylate | Korea | -10~-35 |
| 5 | CCA | MEC-84 | Zinc 3,5-di-*tert-*butylsalicylate | Korea | -10∼-35 |
| 6 | CCA | MEC-84-S | Zinc 3,5-di-*tert-*butylsalicylate | Korea | -10∼-35 |
| 7 | CCA | MEC-91 | Hydroxybis(3,5-di-*tert-*butylsalicylic)aluminate | Korea | -30∼-45 |
| 8 | CCA | MEP-51 | Benzyltributylammoniu m-4-hydroxyl-naphthalene-1-sulfonate | Korea | +30∼+45 |

### Example 1

Polymerization of poly (styrene-butyl acrylate) in presence of CNT-D and a type of CCA, MEC-88, was performed as follows: purified monomers of styrene and butyl acrylate were mixed with DVB (as cross-linker) and BPO (as initiator) to form a dispersed phase. After that, MEC-88 was added to the dispersed phase and we waited until all solids were well dissolved. The continuous phase was prepared by dissolving PVA with molecular weight of 13,000 in distilled water and heated to 70°C, under gentle stirring. Then SDS (as suspension stabilizer) was added to dissolve PVA in water. The dispersion of CNT-D was performed by sonication under ice (to decrease the temperature generated by sonicator) for 10 minutes at an amplitude of 75% in the aforementioned continuous phase. The continuous phase containing well dispersed CNT-D was stirred by Ultura-Turax from IKA-T25 digital for 10 minutes at a speed of 7000 rpm. While the continuous phase was stirring, the dispersed phase (monomers + DVB + BPO) was added drop by drop to produce a suspension.

The mixture was then transferred to a reactor and degased under vacuum at 70 mbar for 10 minutes. After that, the mixture was again stirred using a mechanical stirrer (IKA Eurostar 100 control) at a speed of 180 rpm. Finally, the suspension was polymerized at 75°C for 7 hours under slow purging of nitrogen gas for deoxygenation. The reaction was terminated by cooling to room temperature. The resulting latex was dispersed in distilled water and isolated by centrifugation. The supernatant was decanted and any remaining polymer was washed again, until the supernatant was clear. The product was then dried in a vacuum oven for 24 hours without any heating to remove the residual water. The recipes of all the experiments performed are shown in **Table 8** below.

**Table 8. Recipes for suspension polymerization of styrene and butyl acrylate in presence of CNT-D at different concentrations of the CCA MEC-88**

| Sample code | Monomers | | DVB (g) | BP (g) | PVA (g) | SDS (g) | CNT-D (g) | Tem (°C) | Time (hours) | MEC-88 | | MEC:C NT_{D} | H₂O (mL) |
|---|---|---|---|---|---|---|---|---|---|---|---|---|---|
| | St (g) | BuA (g) | | | | | | | | (g) | (wt%) | | |
| Sample 1 | 18.18 | 4.49 | 1.828 | 0.25 | 0.25 | 0.046 | 0.034 | 75 | 7 | 0.102 | 0.42 | 3:1 | 150 |
| Sample 2 | 18.18 | 4.49 | 1.828 | 0.25 | 0.25 | 0.046 | 0.034 | 75 | 7 | 0.068 | 0.28 | 2:1 | 150 |
| Sample 3 | 18.18 | 4.49 | 1.828 | 0.25 | 0.25 | 0.046 | 0.034 | 75 | 7 | 0.034 | 0.14 | 1:1 | 150 |
| Sample 4 | 18.18 | 4.49 | 1.828 | 0.25 | 0.25 | 0.046 | 0.034 | 75 | 7 | 0.017 | 0.07 | 1:2 | 150 |
| Sample 5 | 18.18 | 4.49 | 1.828 | 0.25 | 0.25 | 0.046 | 0.034 | 75 | 7 | 0.013 | 0.05 | 1:3 | 150 |

### Example 2

Polymerization of poly (styrene-butyl acrylate) in the presence of CNT-D and a type of CCA, MEP-51, was performed as follows: purified monomers, DVB and BPO were prepared as described above in Example 1. However, contrary to the procedure in Example 1, MEP-51 was not added to the dispersed phase, due to the fact that MEP-51 does not dissolve in any of the monomers used. In this example, we tried to dissolve MEP-51 in a small amount of ethanol and then mixed it to the continuous phase that was prepared in same way as described above in Example 1 in relation to MEC-88. The remaining steps were the same as with MEC-88 in Example 1. Dissolving MEP-51 in ethanol then mixing it to the continuous phase allowed to reach complete dissolution of MEP-51. The recipes of the experiments performed are shown in **Table 9** below.

**Table 9. Recipes for suspension polymerization of styrene and butyl acrylate in presence of CNT-D at different concentrations of the CCA MEP-51**

| Sample code | Monomers | | DVB (g) | BP (g) | PVA (g) | SDS (g) | CNT-D (g) | Tem (°C) | Time (hours) | MEP-51 | | MEP:C NT_{D} | H₂O (mL) |
|---|---|---|---|---|---|---|---|---|---|---|---|---|---|
| | St (g) | BuA (g) | | | | | | | | (g) | (wt%) | | |
| Sample 1 | 18.18 | 4.49 | 1.828 | 0.25 | 0.25 | 0.046 | 0.034 | 75 | 7 | 0.102 | 0.42 | 3:1 | 150 |
| Sample 2 | 18.18 | 4.49 | 1.828 | 0.25 | 0.25 | 0.046 | 0.034 | 75 | 7 | 0.068 | 0.28 | 2:1 | 150 |
| Sample 3 | 18.18 | 4.49 | 1.828 | 0.25 | 0.25 | 0.046 | 0.034 | 75 | 7 | 0.034 | 0.14 | 1:1 | 150 |
| Sample 4 | 18.18 | 4.49 | 1.828 | 0.25 | 0.25 | 0.046 | 0.034 | 75 | 7 | 0.017 | 0.07 | 1:2 | 150 |
| Sample 5 | 18.18 | 4.49 | 1.828 | 0.25 | 0.25 | 0.046 | 0.034 | 75 | 7 | 0.013 | 0.05 | 1:3 | 150 |

Characterizations of the polymerized particles were conducted by various techniques as follows: (i) Monomer conversion rate was determined gravimetrically. The sample was taken in a petri-dish and dried under the hood overnight. The conversion rate was calculated from the dried particles. (ii) Polymerized particles size was measured by Dynamic Light Scattering (DLS), Nano-ZS (Malvern Co., UK) with measurement range 0.3 nm - 10 microns (diameter) was used. Light source He-Ne laser 633 nm, Max 5 mV and minimum sample volume 12 µL was used to measure the particles size of the prepared latex. Further, the samples were prepared in 0.01N NaCl solution according to the Malvan recommendation for latex standard. (iii) The morphology of the particles was assessed by Scanning Electron Microscopy (SEM). Scanning Electron Microscope (SEM NNL 200, FEI Company, Netherlands) was used to characterize the morphology of the polymerized latex. For this purpose a drop of dilute polymerized latex (1:5) with Millipore water was spread to dry over copper holder, and this drop was dried in air and metalized with 3 nm Pt.

Each of the four types of CNT outlined above in **Tables 3-6** were investigated with the aim of determining the best one for achieving a good conversion rate and desirable particles size. The results obtained at various concentrations are listed in **Tables 10-13** below.

**Table 10. Effect of CNT-A concentration on suspension polymerization of St and BuA**

| Samples | CNT concentration (wt%) | DLS measurements | | Conversion rate (%) |
|---|---|---|---|---|
| | | Z-Average (nm) | PDI | |
| Sample 1 | 0.065 | 228 | 0.3 | 76 |
| Sample 2 | 0.125 | 1792 | 1.0 | 73 |
| Sample 3 | 0.250 | 6621 | 0.4 | 70 |
| Sample 4 | 0.500 | 625 | 0.6 | 9 |
| Sample 5 | 0.750 | 1929 | 1.00 | 13 |
| Sample 6 | 0.100 | 5749 | 0.84 | 10 |

| | | | | |
|---|---|---|---|---|
| PDI corresponds to the Polydispersity Index and gives an indication of the width of the overall distribution. Z-average corresponds to the average radius of the particles. | | | | |

**Table 11. Effect of CNT-B concentration on suspension polymerization of St and BuA**

| Samples | CNT concentration (wt%) | DLS measurements | | Conversion rate (%) |
|---|---|---|---|---|
| | | Z-Average (nm) | PDI | |
| Sample 1 | 0.065 | 1955 | 1.00 | 78 |
| Sample 2 | 0.125 | 2557 | 1.00 | 72 |
| Sample 3 | 0.250 | 1779 | 1.00 | 59 |
| Sample 4 | 0.500 | 172 | 0.11 | 47 |
| Sample 5 | 0.750 | 279 | 0.265 | 59 |
| Sample 6 | 0.100 | 372 | 0.303 | 33 |

**Table 12. Effect of CNT-C concentration on suspension polymerization of St and BuA**

| Samples | CNT concentration (wt%) | DLS measurements | | Conversion rate (%) |
|---|---|---|---|---|
| | | Z-Average (nm) | PDI | |
| Sample 1 | 0.065 | 5216 | 0.176 | 75 |
| Sample 2 | 0.125 | 782 | 0.617 | 73 |
| Sample 3 | 0.250 | 151 | 0.255 | 75 |
| Sample 4 | 0.500 | 195 | 0.159 | 58 |
| Sample 5 | 0.750 | 1608 | 0.152 | 64 |
| Sample 6 | 1.00 | 268 | 0.351 | 59 |

**Table 13. Effect of CNT-D concentration on suspension polymerization of St and BuA**

| Samples | CNT concentration (wt%) | DLS measurements | | Conversion rate (%) |
|---|---|---|---|---|
| | | Z-Average (nm) | PDI | |
| Sample 1 | 0.065 | 4259 | 1.00 | 96 |
| Sample 2 | 0.125 | 4031 | 1.00 | 94 |
| Sample 3 | 0.250 | 6621 | 0.4 | 90 |
| Sample 4 | 0.500 | 5715 | 0.35 | 96 |
| Sample 5 | 0.750 | 1929 | 1.00 | 93 |
| Sample 6 | 1.00 | 5890 | 0.367 | 90 |

From **Tables 10** and **11** above, which relate to CNT unmodified, it can be seen that, the conversion rates of the polymerized particles were below 78%. This indicates that the retarding/inhibiting effects of the carbonyl group are still present when suspension polymerization occurs. From **Tables 12** and **13** which relate to CNT modified with NH₂ and boron, respectively, there are still some retarding/inhibiting effects, particularly for CNT modified with NH₂, even though most carbonyl groups were replaced by NH₂. It may not be possible to replace all the carbonyl groups by NH₂. The best conversion rates were achieved with CNT modified with boron, CNT-D. As showed in **Table 13,** in each case the conversion rate was 90% or more. This suggests that there are almost no retarding/inhibiting effects when polymerization occurs.

Polymerization of monomers in the presence of CNT-D at a concentration of 0.25wt% and CCA was performed with two types of CCA, namely, MEC-88 and MEP-51. It is known in the art that MEC-88 is a negative charged CCA type. It is also known that MEC-88 does dissolve well in styrene. Accordingly, in our experiments we dissolved MEC-88 in styrene before polymerization takes place. We investigated the effect of the concentration of MEC-88 on the conversion rate of the monomers as well as the polymerized particles size. The results are outlined in **Table 14** below.

**Table 14. Suspension polymerization of styrene and butyl acrylate in the presence of CNT-D at five different concentrations of MEC-88**

| Sample Code | CCA (g) | CCA wt% | CNT-D (g) | CNT-D wt% | Conversion rate (%) | DLS Measurement | |
|---|---|---|---|---|---|---|---|
| | | | | | | Z-Average (nm) | PDI |
| Sample 1 | 0.102 | 0.42 | 0.034 | 0.14 | 12 | 4032 | 1.00 |
| Sample 2 | 0.068 | 0.28 | 0.034 | 0.14 | 58 | 5882 | 0.16 |
| Sample 3 | 0.034 | 0.14 | 0.034 | 0.14 | 68 | 5077 | 0.50 |
| Sample 4 | 0.017 | 0.07 | 0.034 | 0.14 | 70 | 4576 | 1.00 |
| Sample 5 | 0.011 | 0.05 | 0.034 | 0.14 | 75 | 6910 | 0.57 |

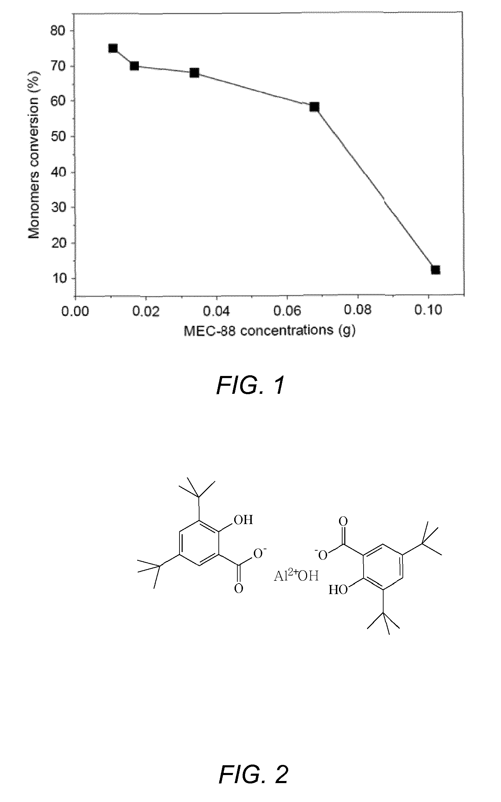

From the **Table 14** above, it can be seen that the conversion rates at concentrations of MEC-88 between 0.05-0.42wt%, are 75% or less. **Fig. 1** shows the conversion *versus* the concentration of MEC-88. It can be seen that, the conversion rate decreases with the increase of MEC-88 concentrations. The maximum conversion rate (75%) was achieved with the minimum concentration of MEC-88 (0.05wt%). By way of explanation, it is known in the art that most types of radical polymerization are adversely influenced by the presence of carbon black, such that the reaction may be retarded or completely inhibited when a strong radical scavenger is used. The functional groups on the surface of carbon black particles are mainly carbonyl groups. Such groups are likely to interact with the primary or propagating radicals. This leads to the retarding/inhibiting effects, as reported by Kiatkamjornwong et al. referred to above. This observation made by Kiatkamjornwong et al. can be related to the phenomenon observed in this disclosure in relation to the use of MEC-88. Indeed, the chemical structure of MEC-88 depicted in **Fig. 2** includes a carbonyl group, which is responsible for the retarding/inhibiting effects. In other words it would not be easy to obtain a high conversion rate of monomers in the presence of MEC-88, since there are carbonyls groups that act as retarding/inhibiting effects.

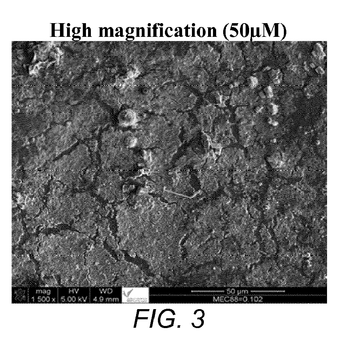

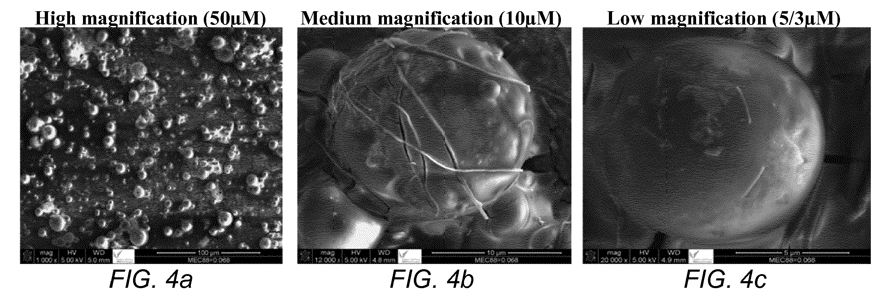

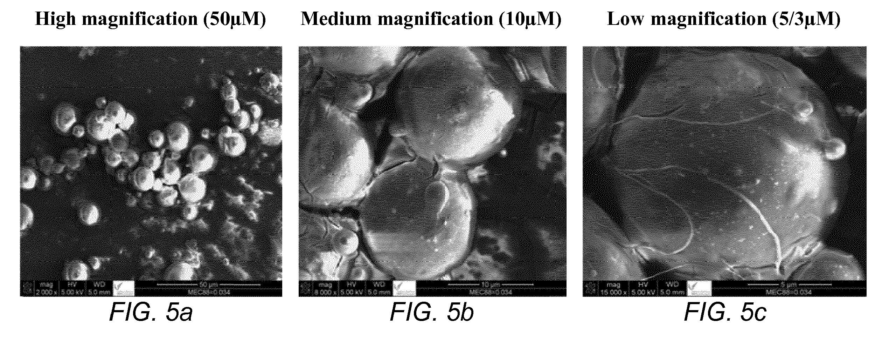

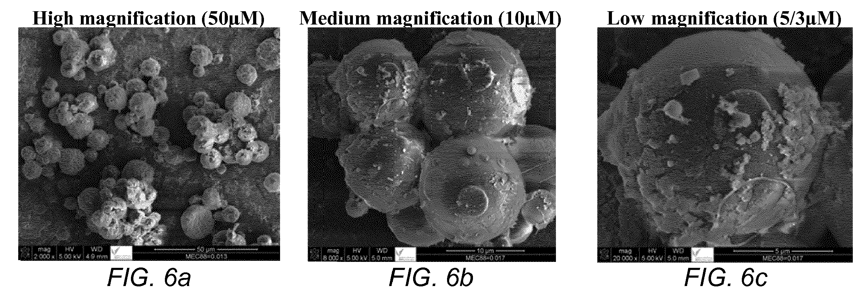

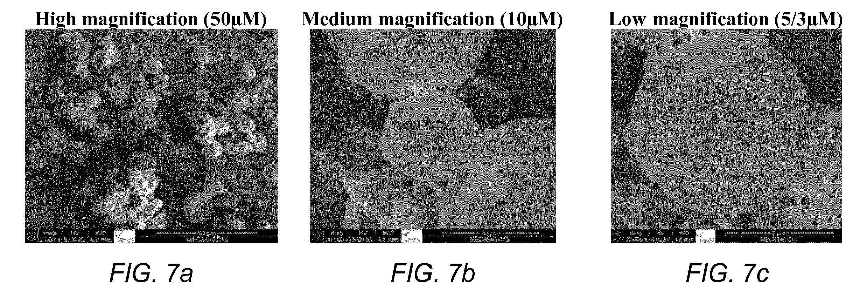

The use of MEC-88 leads to the size of the polymerized particles in the micron range, as outlined in **Table 14,** DLS results (0.16 -1 µm). However, as can be seen on SEM micrographs shown in **Fig. 3****,** **Fig. 4a, Fig. 4b, Fig. 4c****,** **Fig. 5a, Fig. 5b, Fig. 5c****,** **Fig. 6a, Fig. 6b, Fig. 6c****,** **Fig.** 7a, **Fig. 7b** and **Fig. 7c****,** the polymerized particles were not uniform. This is less desirable in toner materials.

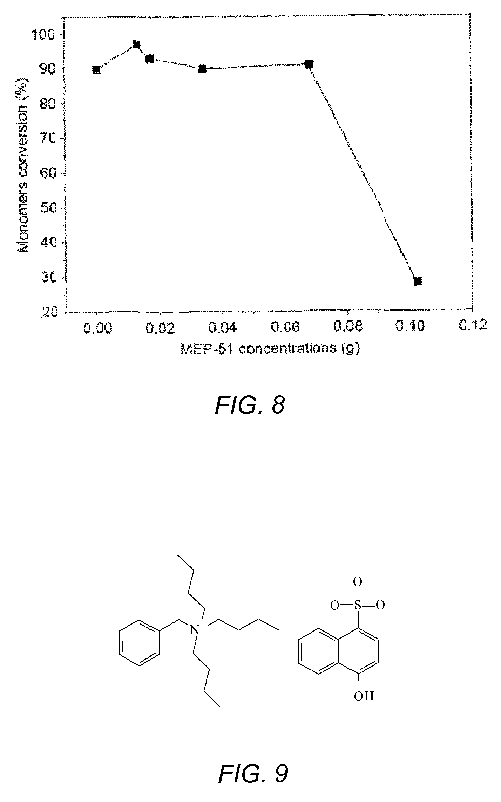

After the relatively unsatisfied results obtained with MEC-88 to produce a material for toner application, we investigated another type of CCA, MEP-51. This CCA type principally is positively charge and its chemical structure depicted in **Fig. 9** has no carbonyl group. These characteristics may allow us to solve the problem associated with the retarding/inhibiting effects mainly attributed to carbonyl groups. As indicated above, MEP-51 does not dissolve in either styrene or water. We tried to dissolve MEP-51 in ethanol in different amounts before mixing it with water (water is acting as the continuous phase that contains PVA, SDS, and dispersed CNT-D). However, we realized that when the amount of ethanol increased, the dispersion of CNT was affected. We thus tried to dissolve MEP-51 in small amount of ethanol (5 ml) to avoid any decrease in dispersion state of CNT. We then investigated the effect of MEP-51 concentration on the conversion rate. Also, particles size and particles morphology at various concentrations of MEP-51 were studied. The results are outlined in **Table 15** below.

As indicated above, ethanol was used in our experiments to dissolve the CCA MEP-51. A skilled person will understand that other suitable solvent can be used for this purpose. This includes for example any C₁-C₆ alcohol. Other suitable solvent may be for example acetone and hexane.

**Table 15. Recipes of suspension polymerization of styrene and butyl acrylate in the presence of CNT-D at five different concentrations of MEP-51**

| Sample Code | CCA con(g) | CCA wt% | CNT-D con(g) | CNT-D wt% | Conversion rate (%) | DLS Measurement | |
|---|---|---|---|---|---|---|---|
| | | | | | | Z-Average (nm) | PDI |
| SP-CNT-D-MEP-51-1 | 0.102 | 0.42 | 0.034 | 0.14 | 28 | 2106 | 1.00 |
| SP-CNT-D-MEP-51-2 | 0.068 | 0.28 | 0.034 | 0.14 | 91 | 6793 | 0.226 |
| SP-CNT-D-MEP-51-3 | 0.034 | 0.14 | 0.034 | 0.14 | 90 | 5251 | 0.146 |
| SP-CNT-D-MEP-51-4 | 0.017 | 0.07 | 0.034 | 0.14 | 93 | 5784 | 0.217 |
| SP-CNT-D-MEP-51-5 | 0.011 | 0.05 | 0.034 | 0.14 | 97 | 5882 | 0.161 |

From the **Table 15** and **Fig. 8** it can be seen that the conversion rates were 90% or more for all the concentrations below 0.28wt%. For the highest concentration of 0.42wt%, the conversion rate was 28wt%. Accordingly, the conversion rate is improved when MEP-51 is used instead of MEC-88.

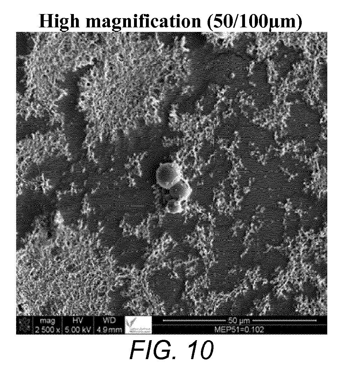

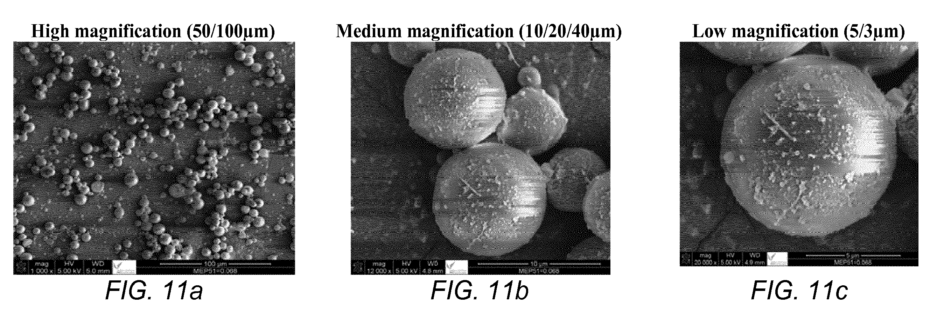

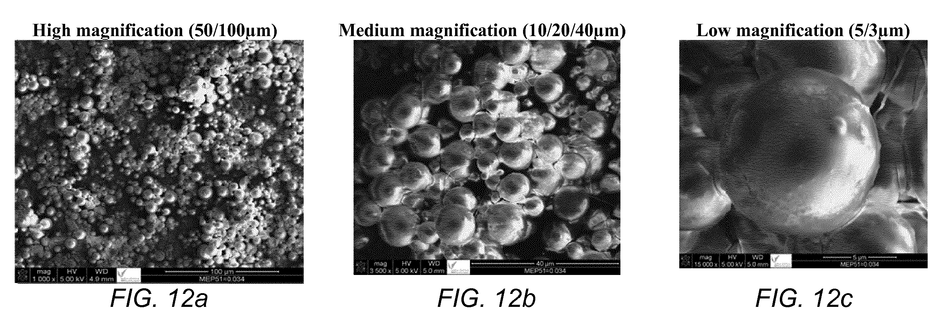

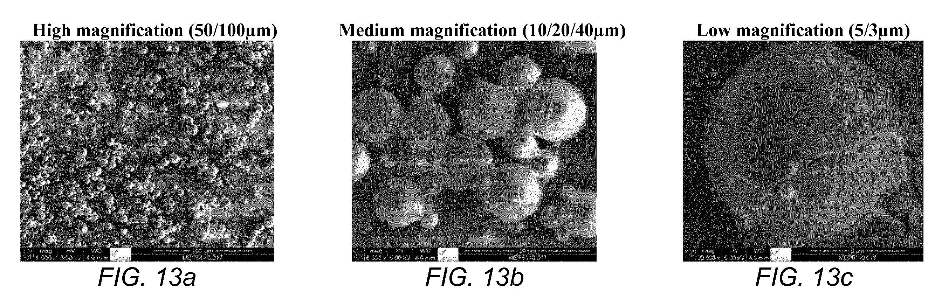

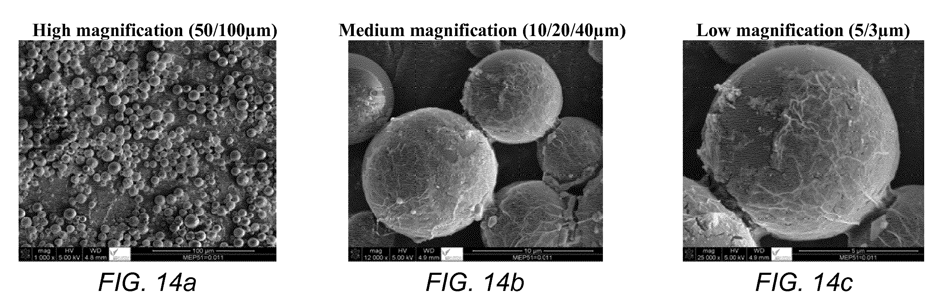

Again referring to Kiatkamjornwong et al., in their work, the conversion rate of styrene and butyl acrylate were not more than 80% for all the cases when carbon black was used as pigment, and this conversion rate decreased with the increase of the carbon black concentration. In this disclosure, when we used CNT, and the conversion rate was 90% or more with MEP-51 as CCA. Accordingly, it is advantageous to use CNT as pigment instead of carbon black. This was not known in the art. Another advantage associated with the use of CNT is the particles size of toner materials obtained, in the micron range as shown in **Fig. 10****,** **Fig. 11a, Fig. 11b, Fig. 11c****,** Fig. **12a, Fig. 12b, Fig. 12c****,** **Fig. 13a, Fig. 13b, Fig. 13c****,** **Fig. 14a, Fig. 14b** and **Fig. 147c.** Indeed, smaller particles sizes for toner materials, in the nanometer range, for example, are not desirable, since such particles are potentially harmful for the health. Accordingly, this disclosure provides for a new toner material that is potentially less harmful for the health.

Four points stem from **Fig.** **Fig. 10****,** **Fig. 11a, Fig. 11b, Fig. 11c****,** **Fig. 12a, Fig. 12b, Fig. 12c****,** **Fig. 13a, Fig. 13b, Fig. 13c****,** **Fig. 14a, Fig. 14b and Fig. 14c****.** Firstly, for all the concentrations, the polymerized toner particles are in micron size. Secondly, the particles size obtained from SEM are quite in agreement with DLS measurement indicated in **Table 15.** Thirdly, uniformity of the particles decreases with the increase of MEP-51 concentrations. Fourthly, it can be seen that attachment of the CNTs on the core particles did occur.

The above four remarkable points prove that CNTs can act in same in the same way as carbon black, when used as pigment for toner materials. In other words, carbon nanotube can replace carbon black in the preparation of toner materials. The use of CNTs instead of carbon black presents some advantages. For example, a high conversion of the monomers, a particles size in the micron range thus avoiding any harmful effect that might be associated with a material with particles size in the nanometer range. Also, the size of the particles is more uniform throughout the material.

Although the present embodiments have been described with reference to specific example embodiments, it will be evident that various modifications and changes may be made to these embodiments without departing from the broader spirit and scope of the various embodiments.

This disclosure refers to a number of documents, the content of which is herein incorporated by reference in their entirety.

### INDUSTRIAL APPLICABILITY

The polymer-encapsulated carbon nanotube material of this disclosure presents some advantages over a polymer-encapsulated carbon black material. The material of this disclosure has particles with size in the micron range, which is potentially less harmful for the health than a material having particles with size in the nanometer range. The material of this disclosure is used as toner material in various types of printing including computer printing. Also, the material of this disclosure is environmentally friendly, since a reduced amount thereof is required for printing. Accordingly, the specification and drawings are to be regarded in an illustrative rather than a restrictive sense.

## Claims

1. A process for preparing a toner material, wherein the process comprises a suspension polymerization process involving a carbon nanotube material.

2. The process according to claim 1, wherein the suspension polymerization process further involves a charge control agent.

3. The process according to claim 1, wherein the suspension polymerization process further involves a charge control agent that is free of any chemical group which reacts with radicals.

4. The process according to claim 1, wherein the suspension polymerization process further involves a charge control agent that is free of any carbonyl group of thiocarbonyl group.

5. The process according to claim 1, wherein the suspension polymerization process further involves a carbon nanotube material that is modified with boron.

6. The process according to claim 1, wherein the suspension polymerization process further involves a charge control agent, the charge control agent being at a concentration of about 0.42 to 0.05wt%.

7. A process for preparing a polymer-encapsulated carbon nanotube material, comprising:
(a) preparing a first mixture or dispersed phase comprising monomers of at least one type, a cross-linker, an initiator and a charge control agent;
(b) preparing a second mixture or continuous phase comprising a polymeric alcohol, a stabilizer and a carbon nanotube material; and
(c) mixing the dispersed phase with the continuous phase to obtain the polymer-encapsulated carbon nanotube material.

8. The process according to claim 7, wherein step (a) comprises a step of adding the charge control agent to a mixture comprising the monomers, the cross-linker and the initiator.

9. The process according to claim 7, wherein step (b) comprises heating to a temperature of about 50 to 90°C.

10. The process according to claim 7, wherein step (c) comprises adding the dispersed phase to the continuous phase, drop by drop, under stirring.

11. The process according to claim 7, wherein step (c) comprises heating to a temperature of 50 to 90°C; for about 5 to 9 hours.

12. The process according to claim 7, wherein step (c) further comprises, after step (c), a step of cooling to room temperature (d).

13. The process according to claim 7, wherein the charge control agent is free of any chemical group which reacts with radicals.

14. The process according to claim 7, wherein the charge control agent is free of any carbonyl group of thiocarbonyl group.

15. The process according to claim 7, wherein carbon nanotube material is modified with boron.

16. The process according to claim 7, wherein the charge control agent is at a concentration of about 0.42 to 0.05wt%.

17. The process according to claim 7, wherein the monomers are styrene and butyl acrylate, the cross-linker is divinylbenzene (DVB), the initiator is benzyl peroxide (BPO), the charge control agent is benzyltributylammonium-4-hydroxyl-naphthalene-1-sulfonate, the polymeric alcohol is polyvinyl alcohol (PVA), and the stabilizer is sodium n-dodecyl sulfate (SDS).

18. A polymer-encapsulated carbon nanotube material obtained by a process which comprises:
(a) preparing a first mixture or dispersed phase comprising monomers of at least one type, a cross-linker, an initiator and a charge control agent;
(b) preparing a second mixture or continuous phase comprising a polymeric alcohol, a stabilizer and a carbon nanotube material; and
(c) mixing the dispersed phase with the continuous phase to obtain the polymer-encapsulated carbon nanotube material.

19. The polymer-encapsulated carbon nanotube material according to claim 18, wherein the monomers are styrene and butyl acrylate, the cross-linker is divinylbenzene (DVB), the initiator is benzyl peroxide (BPO), the charge control agent is benzyltributylammonium-4-hydroxyl-naphthalene-1-sulfonate, the polymeric alcohol is polyvinyl alcohol (PVA), and the stabilizer is sodium n-dodecyl sulfate (SDS).

20. The polymer-encapsulated carbon nanotube material according to claim 18, having particles size in the range of the micron.
